# EUROPÄISCHE PATENTANMELDUNG

(11) **EP 2 434 324 A1**
(43) Veröffentlichungstag der Anmeldung: **28.03.2012**
(21) Anmeldenummer: 10178351.2
(22) Anmeldetag: 22.09.2010
(51) Int. Cl.: G02B 7/02

(54) **Optisches Instrument mit einem Stabilisationselement zur Montage und Justierung einer optischen Baugruppe in eine Halterung und Montageverfahren für das Stabilisationselement**

(71) Anmelder: Hexagon Technology Center GmbH, 9435 Heerbrugg (CH)
(72) Erfinder: ISELI, Claudio, CH-9436 Balgach (CH); SCHEJA, Jochen, CH-9435 Heerbrugg (CH)
(74) Vertreter: Kaminski Harmann

(57) **Zusammenfassung**

Ein optisches Instrument zum Vermessen weist eine optische Baugruppe (1b) mit mindestens einem optischen Element, insbesondere einer Linse, das eine optische Achse (8) definiert, auf. Weiter ist eine Halterung (1a) für die optische Baugruppe (1b), wobei die Halterung (1a) eine Form aufweist, die geeignet ist die optische Baugruppe (1b) zumindest grob aufzunehmen, sodass in eingesetztem Zustand zwischen der Baugruppe (1b) und der Halterung (1a) ein Spalt (13) mit definierter Weite vorhanden ist, und ein Stabilisationsbauteil (2) zum stabilen Verbinden von optischer Baugruppe (1b) und Halterung (1a) mit mindestens einem, in dem Spalt (13) verpressbaren, Stabilisationselement (3a, 3b, 3c) vorgesehen. Gemäss der Erfindung weist das Stabilisationselement (3a, 3b, 3c) in einem unmontierten Zustand eine Dicke auf, die grösser als die Weite des Spaltes (13) ist, und die optische Baugruppe (1b), die Halterung (1a) und das Stabilisationsbauteil (2) sind derart ausgebildet und wirken derart zusammen, dass in einem grob positionierten Zustand durch Einsetzen der optischen Baugruppe (1b) in die Halterung (1a) das zwischen optischer Baugruppe (1b) und Halterung (1a) positionierte Stabilisationselement (3a, 3b, 3c) in dem Spalt (13) verpresst wird und derart plastisch deformiert im Spalt (13) vorliegt, dass elastische Kräfte radial zur optischen Achse (8) zwischen Baugruppe (1b) und Halterung (1a) wirken und die Baugruppe (1b) und die Halterung (1a) in radialer Richtung stabilisiert zueinander vorliegen.

## Beschreibung

Die Erfindung betrifft ein optisches Instrument mit einer optischen Baugruppe, einer Halterung für die optische Baugruppe und einem Stabilisationsbauteil nach dem Oberbegriff des Anspruchs 1 und ein Montageverfahren zum präzise positionierten Montieren einer optischen Baugruppe in eine Halterung mit einem Stabilisationsbauteil nach dem Oberbegriff des Anspruchs 13.

Optische Instrumente werden im Allgemeinen für die Aufnahme von Eigenschaften definierter Punkte in einer Messumgebung verwendet. Bekannte Beispiele für derartige Messgeräte sind z.B. geodätische Geräte zur Vermessung wie z.B. der Theodolit bzw. eine Totalstation. Solche Geräte verfügen über Winkel- und Distanzmessfunktionen, welche eine Richtungs- und Distanzbestimmung zu einem ausgewählten Ziel erlauben. Die Winkel- bzw. Distanzgrössen werden dabei im inneren Bezugssystem des Gerätes ermittelt und müssen für eine absolute Positionsbestimmung ggf. noch mit einem äusseren Bezugssystem verknüpft werden.

Für eine exakte Distanzbestimmung befindet sich eine Anzieleinrichtung, zumeist ein Teleskop, mit optischer Achse, insbesondere einer Zielachse, im Vermessungsgerät. In diese wird ein Laserstrahl eingekoppelt um z.B. mittels Pulslaufzeitbestimmung die Distanz zu Messpunkten zu ermitteln. Aufgrund der hohen geforderten Messgenauigkeit im mm-Bereich sind derzeit die meisten Instrumente mit einem elektrooptischen Distanzmesser ausgerüstet, welcher nach dem Phasenmessprinzip arbeitet. Zudem bieten diese bei distanzmessenden Theodoliten wegen ihres kleineren Volumens Vorteile.

Objektive, Spiegel, Linsen oder andere optische Komponenten müssen hochpräzise in das Gehäuse oder in die Anzieleinrichtung eingebaut und justiert werden, damit im optischen Strahlengang keine ungewollten Abweichungen oder Reflexe auftreten und somit bei einer Messung möglichst genaue Werte bestimmt werden können. Auch das Einkoppelelement für den Laserstrahl muss darin exakt eingepasst sein, damit die Richtung des Strahls möglichst zentrisch und parallel zur Zielachse ausrichtbar ist und möglichst zeitinvariant gehalten wird.

Die genaue Montage von optischen Bauteilen oder optischen Baugruppen in geeignete Halterungen kann Bekanterweise dadurch gewährleistet werden, dass eine aufwändige Bearbeitung der Bauteile durchgeführt wird. Aufgrund der engen Toleranzen müssen die Bauteile möglichst genau aneinander angepasst werden, um eine exakte Positionierbarkeit zu erreichen. Diese Prozesse sind zumeist sehr kostenintensiv und technologisch anspruchsvoll. Schon kleinste Abweichungen bei der Bearbeitung der Bauteile können zu unzureichend stabilen Verbindungen führen und damit eine Nachbearbeitung oder den Ersatz zumindest eines der Bauteile notwendig machen. Darüber hinaus können thermische Effekte, wie das unterschiedliche Ausdehnungsverhalten der Komponenten, nur schwer kompensiert werden, da die Bauteile zumeist aus unterschiedlichen Materialien gefertigt sind. Dadurch kann eine relative Lageänderung der Bauteile zueinander eintreten und der Strahlengang der optischen Komponente so verändert werden, dass die geforderte Genauigkeit oder gar die Funktionalität des Geräts nicht weiter gewährleistet werden kann.

Weiterhin ist bekannt, dass elastisch verpresste Dichtelemente, z.B. O-Ringe, zu dieser Montage eingesetzt und zwischen den Bauteilen platziert und eingebaut werden. Die Toleranzen für die Fertigung der Bauteile kann damit vergrössert und auf eventuell notwendige Nachbearbeitungen verzichtet werden. Teilweise werden besagte Dichtelemente auch dazu verwendet Spielfreiheit in Radialrichtung zu gewährleisten.

Aus der DE 19 924 849 ist eine lösbare und spannungsfreie Halterung eines in eine Fassung zentriert eingelegten optischen Bauelementes bekannt. Das optische Bauelement ist hierbei in dem zu haltenden Randbereich mit einer zur Fassung hin geneigten Fasenfläche versehen und die Fassung weist einen in axialer Richtung vor dem optischen Bauelement offenen Nuteinstich auf. Zwischen Fasenfläche und Nuteinstich ist ein in axialer Richtung elastisch verformbares Ringelement, z.B. ein O-Ring, eingedrückt.

Die Verformbarkeit in axialer Richtung ermöglicht einen Toleranzausgleich zwischen Fasenkante und Nuteinstich, sowie einen Ausgleich einer Materialverformung in axialer Richtung. Geringe Toleranzen zwischen der Fasenkante und der Lage des Nuteinstichs werden durch ein elastisch verformbares Ringelement ausgeglichen. Ebenso können Materialveränderungen in axialer Richtung durch das Ringelement aufgefangen werden. Zusätzlich stellt das Ringelement eine Stoß und Vibrationssicherung dar.

In der DE 10 043 344 wird weiter offenbart, dass an einer Umfangsfläche einer Linse eine Ringnut ausgebildet ist und die Linse ausschließlich über eine Verbindung radial und axial gehalten wird, die durch elastische Elemente an der Linsenfassung mit freien Enden, die in die Ringnut radial eingreifen, entsteht. Die unterschiedliche thermische Ausdehnung der Linsenfassung und der Linse wird dabei in radialer Richtung über die Federwirkung der Segmente kompensiert. Dadurch, dass die Linse mit der Fassung ausschließlich über elastische Segmente verbunden ist, werden dynamische Belastungen nur gedämpft auf die Linse übertragen.

Ein Nachteil der Verwendung von elastischen Dichtelementen für die Montage ist die hohe Reibung und die damit verbundenen "Stick-Slip-Effekte", die beim Montieren und Justieren auftreten können, und somit die Justage der Bauteile erschweren. Dabei können Verzerrungen im Material auftreten und eine asymmetrische Kräfteverteilung die Folge sein, welche durch Temperatur- oder Schockeinflüsse zu relativen Verschiebungen der Bauteile führen können. Des Weiteren weisen diese Elemente aufgrund von Inkompressibilität, nicht vorhandener Plastizität und relativ breiter Toleranzgüte hohe Kontaktkräfte auf, wodurch diese Teile nicht optimal für derartige Montagezwecke geeignet ist. Dadurch können hohe Kräfte zwischen den Bauteilen entstehen, welche wiederum Ursache für ein instabiles Verhalten sein können, und auftretende Erschütterungen können nicht in notwendiger Art und Weise abgefedert werden.

Vor diesem Hintergrund ist es eine allgemeine Aufgabe der vorliegenden Erfindung verbesserte und vereinfachte Montagebedingungen für ein optisches Instrument bereitzustellen, mit welchen die Montage und Justage von optischen Elementen oder optischen Baugruppen in geeignete Halterungen oder Gehäuse zum einen hochpräzise ausgeführt werden kann, gleichzeitig aber auch geforderte thermische und mechanisch-dynamische Stabilitäten gewährleistet werden können und darüber hinaus einen geringeren Technologieaufwand verursachen.

Eine spezifische Aufgabe der Erfindung ist es, das optische Element oder die optische Baugruppe mit Hilfe eines Stabilisationselements zu montieren und damit gleichzeitig geforderte Genauigkeiten und Stabilitäten zu erreichen. Darüber hinaus sollen dabei Fertigungstoleranzen des optischen Elements oder der optischen Baugruppe so ausgleichen werden können, dass trotz einer möglichen ungenauen Fertigung der Bauteile deren Montage und Justage dennoch präzise erfolgen kann.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Ein erfindungsgemässes optisches Instrument weist eine optische Baugruppe, eine Halterung für die Baugruppe und ein Stabilisationsbauteil zum Toleranzausgleich und zum stabilen Verbinden von optischer Baugruppe und Halterung mit mindestens einem, in einem Spalt zwischen Baugruppe und Halterung verpressbaren, Stabilisationselement auf, wobei an diesem Stabilisationselement eine Verformungszone vorgesehen ist. Das Stabilisationselement weist weiter in unmontiertem Zustand eine Dicke auf, die grösser als die Weite des Spaltes ist. In einem grob positionierten Zustand wirkt durch Einsetzen der optischen Baugruppe in die Halterung Druck auf das Stabilisationselement, insbesondere auf die Verformungszone, sodass das Stabilisationselement plastisch deformiert im Spalt vorliegt. Weiter ist in diesem Justierzustand die Winkelstellung von optischer Baugruppe zu Halterung hochpräzise ausrichtbar und das Stabilisationselement befindet sich in genanntem plastisch deformiertem Zustand. Nach einer Ausrichtung werden letztlich die optische Baugruppe und die Halterung in der hochpräzisen Ausrichtung fixiert und definieren somit einen endmontierten Zustand, in welchem restelastische Kräfte durch das deformierte Stabilisationselement radial zu einer optischen Achse, insbesondere zu einer optischen Zielachse, zwischen Baugruppe und Halterung wirken.

Der als Einsetzen der optischen Baugruppe in die Halterung beschriebene Schritt lässt sich weiter unterteilen in ein Einlegen bzw. Positionieren des Stabilisationsbauteils am optischen Bauteil und ein anschliessendes Zusammenfügen der Kombination aus optischem Bauteil und Stabilisationsbauteil mit der Halterung. Bei diesem Zusammenfügen wird das optische Bauteil so in die Halterung eingesetzt bzw. in die Halterung geschoben, dass sich das Stabilisationselement dabei zwischen dem optische Bauteil und der Halterung befindet und ebenfalls zwischen diese geschoben und dabei zwischen den beiden Teilen verpresst wird.

Die stabile Montage einer optischen Baugruppe, oder von zumindest Teilen dieser Baugruppe, muss mit höchster Präzision erfolgen. Erfindungsgemäss verwendet ein Monteur hierzu ein geeignetes Stabilisationsbauteil mit mehreren Stabilisationselementen. Das Stabilisationsbauteil wird zwischen einem Objektiv und einer dafür vorgesehenen Halterung an einem Teleskop platziert und die beiden Teile werden grob miteinander verbunden. Das Verbinden der Bauteile bewirkt eine Verpressung der Stabilisationselemente in einem vorgesehen Spalt zwischen Teleskopobjektiv und Halterung, wodurch die Stabilisationselemente eine zumindest teilweise plastische Verformung aufweisen. Dabei auftretende radiale Kräfte bewirken eine stabile Lagerung der beiden Teile zueinander. Darüber hinaus sind die Kräfte derart ausgebildet, dass aufgrund der elastischen Eigenschaften des Materials, aus welchem die Stabilisationselemente gefertigt sind, jetzt eine präzise Feinjustage mindestens eines Freiheitsgrades, z.B. die Ausrichtung der Winkelstellung oder eine axiale Ausrichtung beider Bauteile zueinander, durch den Monteur erfolgen kann. Mittels eines Schraubrings erfolgt anschliessend eine Fixierung des Objektivs zur Halterung am Teleskop in dieser hochpräzisen Ausrichtung.

Insbesondere kann ein optisches Instrument, wie z.B. eine Totalstation, dabei ein Stabilisationsbauteil mit einem oder mehreren Stabilisationselementen aufweisen, sodass die radialen Kräfte, verursacht durch das Verpressen der Elemente, gleichmässig verteilt über die Kontaktflächen der optischer Baugruppe oder der Halterung vorliegen.

Zusätzlich kann das Stabilisationsbauteil einen Rahmen aufweisen, an welchem die Stabilisationselemente angeordnet sind, mit einer Form, die der Form von mindestens einem der zu verbindenden Bauteile entspricht. Diese Ausführung kann die Montage der Stabilisationselemente insofern erleichtern, dass nicht jedes Element einzeln in eine dafür vorgesehene Position gebracht werden muss, sondern durch die korrekte Positionierung des einen Bauteils alle damit verbundenen Elemente in einer definierten Position vorliegen.

Insbesondere kann dieses Stabilisationsbauteil und dessen Rahmen dafür ringförmig ausgeführt sein, wobei die Stabilisationselemente gleichmässig über das Stabilisationsbauteil verteilt angeordnet und in axialer Richtung ausgerichtet sind. Durch diese Ausrichtung sind die Stabilisationselemente leichter in einem Spalt positionierbar und ausrichtbar. Zur weiteren Erleichterung der Platzierung des Stabilisationsbauteils z.B. zwischen optischer Baugruppe und Halterung und einer anschliessenden Justage der optischen Baugruppe kann das Stabilisationsbauteil aus mehreren Teilen bestehen. Z.B. kann ein ringförmiges Bauteil in einzelne Ringsegmente von jeweils einem viertel Kreisbogen unterteilt sein, wobei vier Segmente bei einer Montage einzeln eingesetzt und dadurch zu einem Ring zusammengesetzt werden.

Darüber hinaus kann das optische Instrument mit optischer Baugruppe und Halterung derart gestaltet sein, dass die Anzahl der zur Montage verwendeten Stabilisationselementen von den elastischen Kräften senkrecht zur optischen Achse derart abhängt, dass in einem Justierzustand die Winkelstellung von optischer Baugruppe zu Halterung, insbesondere durch eine gleitende Drehbewegung, hochpräzise ausrichtbar ist und sich das Stabilisationselement dabei in einem plastisch deformierten Zustand befindet.

Das optische Instrument kann weiter ein Stabilisationselement aufweisen, das insbesondere im Bereich der Verformungszone, homogene plastische Eigenschaften, insbesondere einen homogenen plastischen Fliessbereich, aufweist. Indem die elastischen Eigenschaften des Stabilisationselements über diesen Fliessbereich hinweg weitgehend konstant bleiben, kann somit ein für die genaue Positionierung der Bauteile zueinander benötigter Toleranzbereich vergrössert werden. Damit können Fertigungskosten, die für eine präzise Bearbeitung der zu verbindenden Bauteile aufgebracht werden müssen, zumindest teilweise eingespart werden

Ein erfindungsgemässes Stabilisationsbauteil kann ferner in einem Spritzgussverfahren hergestellt werden. Das Spritzgussverfahren bietet den Vorteil einer schnellen und technologisch beherrschbaren Produktionsweise und kann die Produktionskosten der Bauteile überschaubar halten bzw. verringern.

Ausserdem kann in die optische Baugruppe das Stabilisationsbauteil integriert sein, insbesondere wobei das Stabilisationsbauteil und/oder das Stabilisationselement an die optische Baugruppe angespritzt ist oder die optische Baugruppe und das Stabilisationsbauteil und/oder das Stabilisationselement einstückig ausgebildet sind. Durch diese Weiterbildung kann eine Montage der Teile derart erleichtert werden, dass ein vorangehendes Platzieren des Stabilisationselements oder - bauteils zwischen zwei Teilen entfallen kann. Als optisches Instrument kann hier ein geodätisches Gerät, insbesondere eine Totalstation oder ein Theodolit, und als optische Baugruppe z.B. ein Teleskop verstanden werden.

Erfindungsgemäss weist ein Montageverfahren zum präzise positionierten Montieren einer optischen Baugruppe mit definierter optischer Achse in eine Halterung, wobei in zusammengesetztem Zustand zwischen Baugruppe und Halterung ein Spalt mit definierter Weite vorhanden ist, ein Stabilisationsbauteil, und mindestens ein, in dem Spalt verpressbares, Stabilisationselement auf, wobei das Stabilisationselement eine Verformungszone aufweist. Dabei erfolgen in einem ersten Schritt das Platzieren des Stabilisationsbauteils zwischen Baugruppe und Halterung sowie die grobe Positionierung der optischen Baugruppe und der Halterung zueinander. Weiter findet ein Verpressen des Stabilisationselements zwischen Baugruppe und Halterung statt, sodass die Verformungszone innerhalb eines homogenen plastischen Bereichs deformiert wird und elastische Eigenschaften erhalten bleiben. Im nächsten Schritt erfolgt ein Justieren der Winkelstellung und/oder einer axialen Position der optischen Baugruppe zur Halterung, wobei die plastische Deformation des Stabilisationselements erhalten bleibt. Zuletzt werden die optische Baugruppe und die Halterung fixiert, sodass elastische Kräfte durch das deformierte Stabilisationselement zwischen Baugruppe und Halterung radial zur optischen Achse wirken.

Insbesondere kann das Justieren der optischen Baugruppe zur Halterung durch ein Drehen der optischen Baugruppe um die optische Achse, insbesondere Zielachse, und/oder durch ein axiales Bewegen parallel zur optischen Achse erfolgen.

Das Justieren der optischen Baugruppe in die dafür vorgesehene Halterung wird notwendig, um z.B. den Strahlengang eines optischen Instruments derart auszurichten, dass dieser zentrisch durch die optische Baugruppe verläuft. Hierfür kann die optische Baugruppe vermittelt über das verpresste Stabilisationselement zum einen um seine optische Achse rotiert werden, zum anderen kann die optische Baugruppe auch gleitend entlang der optischen Achse fein justiert werden, um z.B. eine vordefinierte Position in der Halterung zu erreichen und in dieser Position fixiert zu werden. Insbesondere wenn an der Baugruppe weitere nicht rotationssymmetrische Teile vorgesehen sind und diese in einer exakt vorbestimmten Stellung relativ zur Halterung verbaut werden müssen kann eine derartige Justierung notwendig sein.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1: ein erfindungsgemässes Stabilisationsbauteil im Querschnitt;
- Fig. 2: ein erfindungsgemässes Stabilisationsbauteil in montiertem Zustand;
- Fig. 3: ein erfindungsgemässes Stabilisationsbauteil für eine axiale Ausrichtung in montiertem Zustand;
- Fig. 4: eine Ausführungsform des erfindungsgemässen Stabilisationsbauteils mit Rahmen und sechs Stabilisationselementen;
- Fig. 5: eine weitere Ausführungsform des erfindungsgemässen Stabilisationsbauteils mit Rahmen und drei Stabilisationselementen;
- Fig. 6: eine Ausführungsform einer optischen Baugruppe und Halterung mit einem erfindungsgemässen Stabilisationselement im Querschnitt und in montiertem Zustand;
- Fig. 7: eine weitere Ausführungsform einer optischen Baugruppe und Halterung mit einem erfindungsgemässen Stabilisationsbauteil mit drei Stabilisationselementen im Querschnitt und in montiertem Zustand;
- Fig. 8: eine Ausführungsform einer Visiereinrichtungsoptik mit erfindungsgemässen Stabilisationselementen.

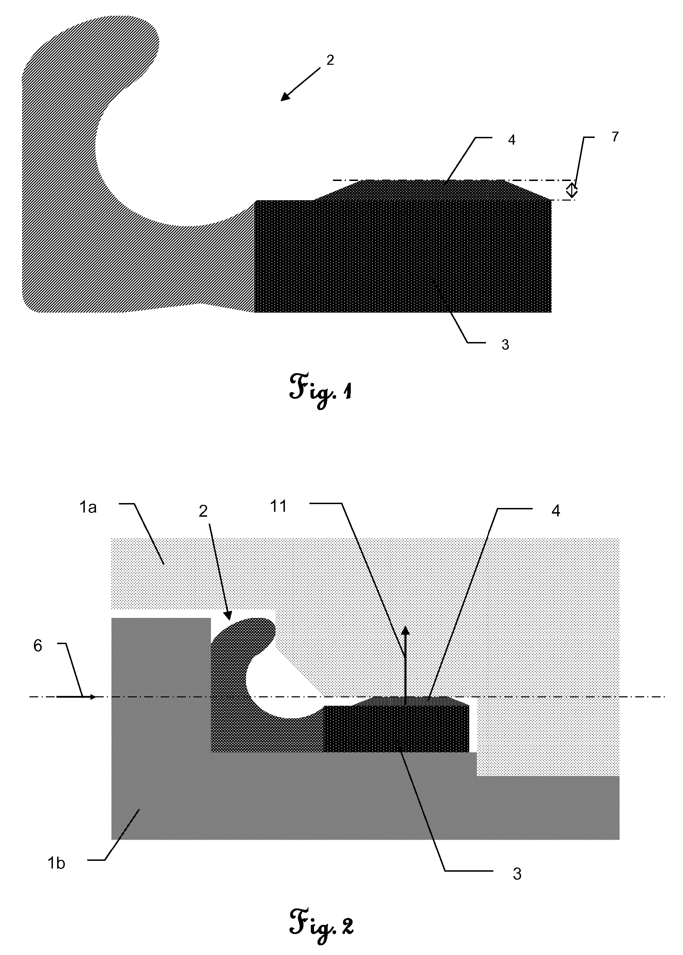

Figur 1 zeigt ein erfindungsgemässes Stabilisationsbauteil 2 für die Montage einer optischen Baugruppe in eine Halterung im Querschnitt. Das Stabilisationsbauteil besteht dabei aus einem Stabilisationselement 3 mit einem Verformungselement 4. Das Verformungselement weist weiter einen Verpressungsbereich 7 auf, innerhalb dessen das Verformungselement 4 bei einer Montage des Stabilisationsbauteils 2 in einem optischen Instrument deformiert wird, der aber nicht überschritten wird.

Das Stabilisationselement 3 mit Verformungselement 4 ist dicker als die Weite eines Spaltes, der zwischen zwei präzise gefertigten Bauteilen besteht, wenn diese auf die vorgesehene Art und Weise miteinander verbunden werden. Durch die Verpressung des Stabilisationselementes 3 wird in diesem eine Druckspannung aufgebaut, die zu einer plastischen Deformation im Verformungselement führt.

Die Deformation ist dabei auf einen Toleranzbereich beschränkt, in welchem die elastische Druckspannung im Fertigungsmaterial im Wesentlichen konstant bleibt. Durch diese Vorspannung gelingt eine thermisch und klimatisch stabile und schockresistente Positionierung zweier Bauteile zueinander.

In Figur 2 wird schematisch im Querschnitt ein erfindungsgemässes Stabilisationsbauteil 2 in montiertem Zustand zwischen einer Halterung 1a und einer optischen Baugruppe 1b gezeigt. Das Stabilisationsbauteil 2 und die optische Baugruppe 1b sind dabei rotationssymmetrisch um die optische Achse - hier nicht gezeigt - der optischen Baugruppe 1b ausgeführt. Das Verformungselement 4 liegt deformiert vor. Durch die Deformation treten radiale, restelastische Kräfte 11 auf, die dafür Sorge tragen, dass die Bauteile im Wesentlichen spielfrei zueinander positioniert und schockresistent gelagert sind. Die radialen Kräfte 11 sind das Resultat der elastischen Materialeigenschaften des Stabilisationselements 3 und des Verformungselements 4 und der Deformation dieser Elemente. Der Pfeil 6 kennzeichnet die Richtung, in welcher die Montage der Teile stattfindet. Die optische Baugruppe 1b wird zusammen mit dem Stabilisationsbauteil 2 in die Halterung 1a geschoben bis beide eine Vormontageposition erreicht haben. In dieser Position kann die optische Baugruppe präzise gegenüber der Halterung ausgerichtet und somit eine exakte Justage der optischen Baugruppe vorgenommen werden. Durch diese Anordnung verbleibt nur noch ein Freiheitsgrad, hier ein Rotationsfreiheitsgrad, im System und das Ausrichten kann somit hochpräzise erfolgen.

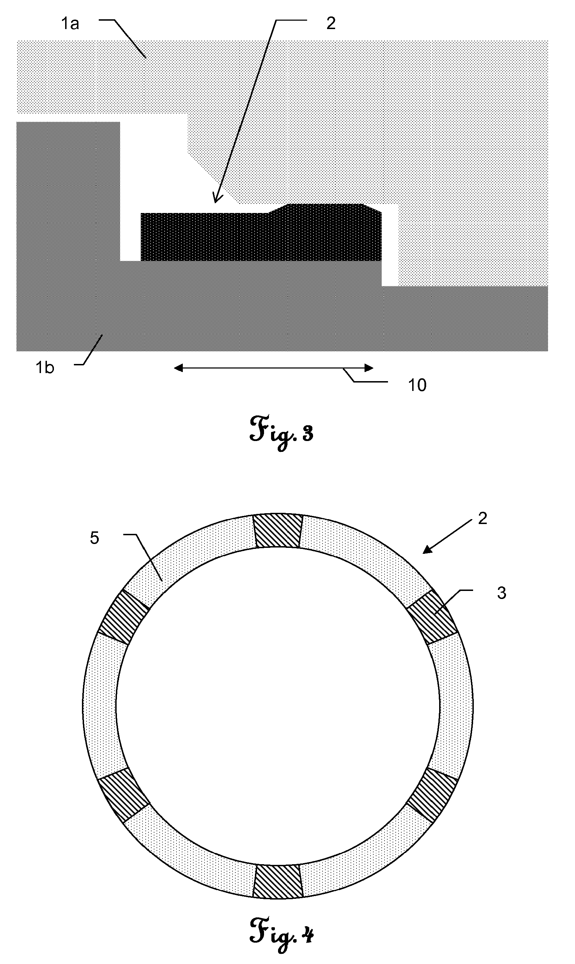

Figur 3 zeigt ebenfalls ein erfindungsgemässes Stabilisationsbauteil 2 in montiertem Zustand zwischen einer Halterung 1a und einer optischen Baugruppe 1b. Durch dieses Stabilisationsbauteil 2 kann, wie durch den Pfeil 10 angedeutet, eine Justage der optischen Baugruppe 1b und der Halterung 1a relativ zueinander in einer axialen Richtung erfolgen. Aufgrund der spezifischen Materialeigenschaften des Stabilisationsbauteils 2 kann die optische Baugruppe 1b in der Halterung 1a in axialer Richtung weitestgehend gleitend bewegt und damit z.B. ohne das Auftreten von unerwünschten Verspannungen im Material nach dem Erreichen einer vorgesehenen Position fixiert werden. Zusätzlich zu dieser axialen Ausrichtung kann wie für Figur 2 beschrieben ein Ausrichten um eine Drehachse erfolgen.

Figur 4 zeigt ein erfindungsgemässes Stabilisationsbauteil 2 in einem Schnitt senkrecht zur Montagerichtung. Das Bauteil weist einen Rahmen 5 auf, an dem sechs gleichartige Stabilisationselemente 3 angeordnet sind. Das Stabilisationsbauteil 2 ist hier kreisrund ausgeführt und eignet sich zum Einbau einer runden und rotationssymmetrischen optischen Baugruppe in eine entsprechende Halterung. Die Stabilisationselemente 3 sind parallel zur Montagerichtung des Stabilisationsbauteils 2 ausgerichtet.

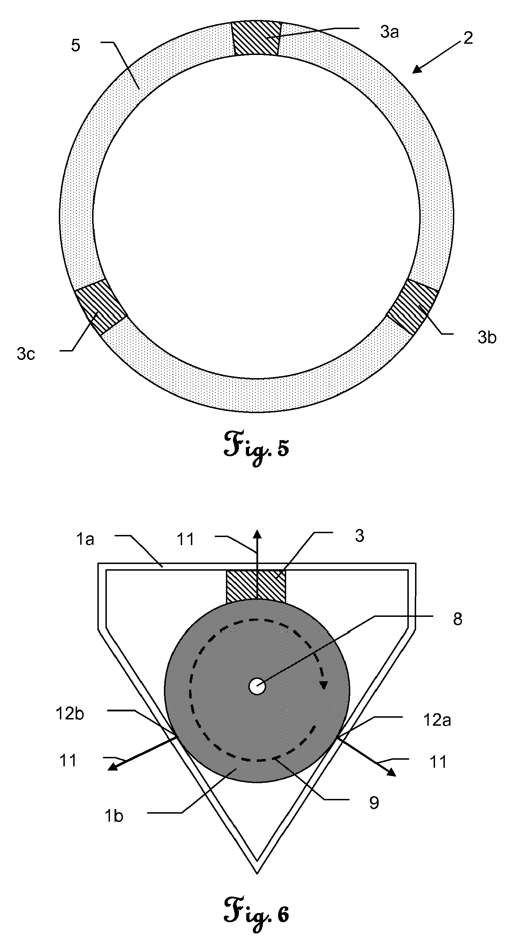

Dagegen wird in Figur 5 eine zweite Ausführungsform eines erfindungsgemässen Stabilisationsbauteils 2 ebenfalls in einem Schnitt senkrecht zur Montagerichtung gezeigt, welches drei unterschiedliche Stabilisationselemente 3a, 3b, 3c an einem Rahmen 5 aufweist. Insbesondere für nicht symmetrische Bauformen von optischen Baugruppen oder Halterungen ist diese Ausführungsform geeignet. Wie in Figur 3 sind die Stabilisationselemente 3a, 3b, 3c auch hier parallel zur Montageachse des Bauteils ausgerichtet.

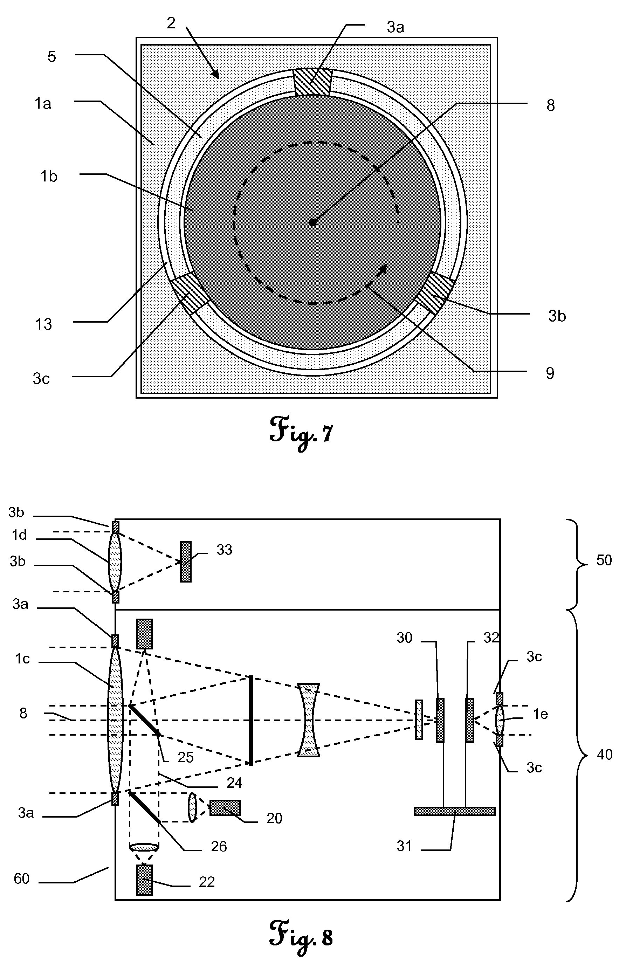

Figur 6 zeigt eine Ausführungsform einer optischen Baugruppe 1b und einer Halterung 1a für die Baugruppe in montiertem Zustand. In dieser Ausführungsform wird ein einzelnes erfindungsgemässes Stabilisationselement 3 zur Montage verwendet, wobei die optische Baugruppe 1b an zwei weiteren Berührpunkten 12a, 12b mit der Halterung 1a in Kontakt und damit stabil gelagert ist. In einem grob montierten Zustand findet auch hier eine Präzisionsausrichtung der beiden Bauteile zueinander statt. Die Drehung bzw. Rotation 9 um die optische Achse 8 oder eine axiale Ausrichtung werden aufgrund einer geeigneten Anzahl von Stabilisationselementen 3 - hier nur ein einzelnes - und der damit wirkenden radialen Kräfte 11 möglich. Die auftretenden radialen Kräfte verteilen sich dabei weitgehend symmetrisch, hier z.B. rotationssymmetrisch radial um die optische Achse in einem Winkel von jeweils 120° zueinander, auf die Berührpunkte 12a, 12b und das Stabilisationselement 3. Bei einer grösseren Anzahl vorhandener Stabilisationselemente 3 werden die radialen Kräfte 11 auf mehrere einzelne Elemente weitgehend symmetrisch verteilt. In einer weiteren Ausführungsform können z.B. sechs Stabilisationselemente 3 vorgesehen sein, die symmetrisch um die Achse 8 angeordnet sind, wobei benachbarte Elemente 3 jeweils in einen Zwischenwinkel von 60° zueinander angeordnet sind. Zusätzlich kann die optische Baugruppe 1b in der Halterung 1a entlang der optische Achse 8 bewegt und dadurch bezüglich einer zweiten Richtung ausgerichtet werden. Eine weitere erfindungsgemässe Ausführungsform wird in Figur 7 gezeigt. Eine optische Baugruppe 1b ist mittels eines Stabilisationsbauteils 2 in eine geeignete Halterung 1a montiert. Das Stabilisationsbauteil 2 befindet sich in einem vorgesehenen Spalt 13 zwischen optischer Baugruppe 1b und Halterung 1a. Es weist einen Rahmen 5 in Ringform auf, an welchem drei Stabilisationselemente 3a, 3b, 3c angeordnet sind. Die Dicke der Stabilisationselemente 3a, 3b, 3c ist in unmontiertem Zustand grösser als die Weite des Spaltes 13. Im gezeigten montierten Zustand sind die Stabilisationselemente 3a, 3b, 3c derart verpresst, dass vorhandene Toleranzen von den restlichen Bauteilen ausgeglichen werden und im montierten Zustand benötigte Schockfestigkeiten und bei thermischen Einflüssen genügende Lage-Stabilität vorhanden sind. Wie in der Ausführungsform in Figur 6 erfolgt eine präzise Ausrichtung der optischen Baugruppe 1b zur Halterung 1a durch Rotation 9 der Teile zueinander, um die optische Achse 8 der Baugruppe 1b.

Figur 8 zeigt eine Visiereinrichtung 40 mit einem Objektiv 1c, einer Fokussieroptik 22, einem Kamerasensor 30, einer Anzeigekomponente 32 und einem Okular 1e. Zusätzlich wird eine Übersichtseinrichtung 50 mit einer Übersichtskamera 33 und einem zweiten Objektiv 1d gezeigt. Die Visiereinrichtung 40 und die Übersichtseinrichtung 50 sind in einem Gehäuse 60 angeordnet.

Zwischen den Objektiven 1c, 1d und dem Gehäuse 60 sowie zwischen dem Okular 1e und dem Gehäuse 60 sind jeweils zur Gewährleistung einer schockresistenten und thermisch stabilen Lagerung geeignete erfindungsgemässe Stabilisationselemente 3a, 3b, 3c angeordnet. Für eine Distanzmessung und eine automatische Zielsuchfunktion sind eine EDM-Laserquelle 20 bzw. eine Feinanziel-Lichtquelle 22 vorgesehen, wobei die EDM-Laserstrahlen bzw. die Feinanziel-Strahlen anhand eines ersten und zweiten Strahlkombinierers 25,26 - wie beispielsweise Strahlteilerflächen mit dichroitischer Beschichtung - entsprechend in oder aus dem Strahlengang 24 ein- und ausgekoppelt werden. Mit der durch die Stabilisationselemente 3a zusätzlich gegebenen Möglichkeit einer präzisen Justage des Objektivs 1c kann eine genaue Ausrichtung des Strahlengangs 24 und der optischen Achse 8 des Objektivs 1c erfolgen. Insbesondere kann die präzise Ausrichtung eines Kombinationsbauteils, bestehend aus mindestens einem Objektiv 1c und einem Strahlkombinierer 25, unerlässlich hinsichtlich des Verlaufs des Strahlengangs 24 sein. Das Objektiv 1c kann z.B. auch mehrlinsig aufgebaut oder panfokal ausgeführt sein.

In der Visiereinrichtung 40 ist ausserdem ein Grafikprozessor 31 vorhanden, der mit dem Kamerasensor 30 und der Anzeigekomponente 32 verbunden ist, sodass ein erfasstes Kamerabild als generiertes Anzeigebild von einem Benutzer durch das Okular 1e betrachtet werden kann.

## Patentansprüche

1. Optisches Instrument zum Vermessen mit:
● einer optischen Baugruppe (1b) mit mindestens einem optischen Element (1c, 1d, 1e), insbesondere einer Linse, das eine optische Achse (8) definiert,
● einer Halterung (1a) für die optische Baugruppe (1b), wobei die Halterung (1a) eine Form aufweist, die geeignet ist die optische Baugruppe (1b) zumindest grob aufzunehmen, sodass in eingesetztem Zustand zwischen der Baugruppe (1b) und der Halterung (1a) ein Spalt (13) mit definierter Weite vorhanden ist, und
● einem Stabilisationsbauteil (2) zum Toleranzausgleich und zum stabilen Verbinden von optischer Baugruppe (1b) und Halterung (1a) mit mindestens einem, in dem Spalt (13) verpressbaren, Stabilisationselement (3, 3a, 3b, 3c),
**dadurch gekennzeichnet, dass**
● das Stabilisationselement (3, 3a, 3b, 3c) in einem unmontierten Zustand eine Dicke aufweist, die grösser als die Weite des Spaltes (13) ist, und
● die optische Baugruppe (1b), die Halterung (1a) und das Stabilisationsbauteil (2) derart ausgebildet sind und derart zusammenwirken, dass in einem grob positionierten Zustand durch Einsetzen der optischen Baugruppe (1b) in die Halterung (1a) das zwischen optischer Baugruppe (1b) und Halterung (1a) positionierte Stabilisationselement (3, 3a, 3b, 3c) in dem Spalt (13) verpresst wird und derart plastisch deformiert im Spalt (13) vorliegt, dass restelastische Kräfte (11) radial zur optischen Zielachse (8) zwischen Baugruppe (1b) und Halterung (1a) wirken und die Baugruppe (1b) und die Halterung (1a) in radialer Richtung stabilisiert zueinander vorliegen.

2. Optisches Instrument nach Anspruch 1,
**dadurch gekennzeichnet, dass**
die Anzahl der Stabilisationselemente (3, 3a, 3b, 3c) und die dadurch senkrecht zur optischen Achse (8) wirkenden restelastischen Kräfte (11) derart gewählt sind, dass in einem Justierzustand die Winkelstellung von optischer Baugruppe (1b) zu Halterung (1a), insbesondere durch eine gleitende Drehbewegung (9), hochpräzise ausrichtbar ist und/oder die optische Baugruppe (1b) bezüglich der Halterung (1a) axial justierbar ist, wobei die Stabilisationselemente (3, 3a, 3b, 3c) plastisch deformiert vorliegen.

3. Optisches Instrument nach Anspruch 1 oder 2,
**dadurch gekennzeichnet, dass**
durch eine Fixierung in einem endmontierten Zustand die optische Baugruppe (1b) und die Halterung (1a) in der hochpräzisen Ausrichtung festgehalten werden.

4. Optisches Instrument nach einem der Ansprüche 1 bis 3,
**dadurch gekennzeichnet, dass**
mindestens drei Stabilisationselemente (3, 3a, 3b, 3c) an einem Stabilisationsbauteil (2) angeordnet sind.

5. Optisches Instrument nach einem der Ansprüche 1 bis 4,
**dadurch gekennzeichnet, dass**
das Stabilisationsbauteil (2) einen Rahmen (5) aufweist, insbesondere wobei der Rahmen (5) eine Form korrespondierend zur Form der Halterung (1a) und/oder der optischen Baugruppe (1b) aufweist.

6. Optisches Instrument nach einem der Ansprüche 1 bis 5,
**dadurch gekennzeichnet, dass**
das Stabilisationsbauteil (2) ringförmig ist und die Stabilisationselemente (3, 3a, 3b, 3c) gleichmässig über das Stabilisationsbauteil (2) verteilt angeordnet und in axialer Richtung ausgerichtet sind.

7. Optisches Instrument nach einem der Ansprüche 1 bis 6,
**dadurch gekennzeichnet, dass**
das Stabilisationselement (3, 3a, 3b, 3c) eine Verformungszone (4) aufweist.

8. Optisches Instrument nach einem der Ansprüche 1 bis 7
**dadurch gekennzeichnet, dass**
das Stabilisationselement (3, 3a, 3b, 3c), insbesondere im Bereich der Verformungszone (4), aus einem Material mit homogenen plastischen Eigenschaften, insbesondere mit einem homogenen plastischen Fliessbereich, besteht.

9. Optisches Instrument nach einem der Ansprüche 1 bis 8,
**dadurch gekennzeichnet, dass**
das Stabilisationsbauteil (2) in einem Spritzgussverfahren hergestellt ist.

10. Optisches Instrument nach einem der Ansprüche 1 bis 9,
**dadurch gekennzeichnet, dass**
das Stabilisationsbauteil (2) in die optische Baugruppe (1b) integriert ist, insbesondere wobei das Stabilisationsbauteil (2) und/oder das Stabilisationselement (3, 3a, 3b, 3c) an die optische Baugruppe (1b) angespritzt ist oder die optische Baugruppe (1b) und das Stabilisationsbauteil (2) einstückig ausgebildet sind.

11. Optisches Instrument nach einem der Ansprüche 1 bis 10,
**dadurch gekennzeichnet, dass**
das optische Instrument als geodätisches Gerät, insbesondere als Totalstation, und die optische Baugruppe (1b) insbesondere als Teleskopobjektiv ausgeführt ist.

12. Stabilisationsbauteil (2) zum präzise positionierten Montieren einer optischen Baugruppe (1b) mit definierter optischer Achse (8) in eine Halterung (1a) in einem optischen Instrument nach Anspruch 1, mit mindestens einem, in dem Spalt (13) verpressbaren, Stabilisationselement (3, 3a, 3b, 3c),
**dadurch gekennzeichnet, dass**
● das Stabilisationselement (3, 3a, 3b, 3c) in einem unmontierten Zustand eine Dicke aufweist, die grösser als die Weite des Spaltes (13) ist, und
● die optische Baugruppe (1b), die Halterung (1a) und das Stabilisationsbauteil (2) derart ausgebildet sind und derart zusammenwirken, dass in einem grob positionierten Zustand durch Einsetzen der optischen Baugruppe (1b) in die Halterung (1a) das zwischen optischer Baugruppe (1b) und Halterung (1a) positionierte Stabilisationselement (3, 3a, 3b, 3c) in dem Spalt (13) verpresst wird und derart plastisch deformiert im Spalt (13) vorliegt, dass restelastische Kräfte (11) radial zur optischen Achse (8) zwischen Baugruppe (1b) und Halterung (1a) wirken und die Baugruppe (1b) und die Halterung (1a) in radialer Richtung stabilisiert zueinander vorliegen.

13. Montageverfahren zum präzise positionierten Montieren einer optischen Baugruppe (1b) mit definierter optischer Achse (8) in eine Halterung (1a), wobei in zusammengesetztem Zustand zwischen Baugruppe (1b) und Halterung (1a) ein Spalt (13) mit definierter Weite vorhanden ist, mit einem Stabilisationsbauteil (2), mit mindestens einem, in dem Spalt (13) verpressbaren, Stabilisationselement (3, 3a, 3b, 3c), und mit den Schritten:
● Grobes Positionieren der optischen Baugruppe (1b) und der Halterung (1a) zueinander und Platzieren des Stabilisationsbauteils (2) zwischen Baugruppe (1b) und Halterung (1a),
● Verpressen des Stabilisationselements (3, 3a, 3b, 3c) zwischen Baugruppe (1b) und Halterung (1a), sodass das Stabilisationselement (3, 3a, 3b, 3c) innerhalb eines homogenen plastischen Bereichs deformiert wird und restelastische Kräfte (11) derart radial zur optischen Achse (8) zwischen Baugruppe (1b) und Halterung (1a) wirken, dass die beiden Bauteile in radialer Richtung stabilisiert zueinander vorliegen,
● Justieren einer Winkelstellung und/oder einer axialen Position der optischen Baugruppe (1b) zur Halterung (1a), wobei die plastische Deformation des Stabilisationselements (3, 3a, 3b, 3c) erhalten bleibt, und
● Fixieren der optischen Baugruppe (1b) und der Halterung (1a), sodass diese in der eingestellten Winkelstellung und/oder der axialen Position festgehalten werden.

14. Montageverfahren nach Anspruch 13
**dadurch gekennzeichnet, dass**
das Justieren der optischen Baugruppe (1b) zur Halterung (1a) durch ein Drehen der optischen Baugruppe (1b) um die optische Achse (8) und/oder durch ein axiales Bewegen parallel zur optischen Achse (8) erfolgt.
